# FASCICULE DE BREVET EUROPEEN

(11) **EP 3 745 169 B1**
(45) Date de publication et mention de la délivrance du brevet: **02.11.2022**
(21) Numéro de dépôt: 20176357.0
(22) Date de dépôt: 25.05.2020
(51) Int. Cl.: G02B 5/32, G02B 27/01, B32B 17/06, B61D 25/00, G03B 21/625, G02B 5/18

(54) **VOITURE DE VEHICULE FERROVIAIRE A VITRES HOLOGRAPHIQUES**
EISENBAHNWAGGON MIT HOLOGRAPHISCHEN GLASSCHEIBEN
RAILWAY VEHICLE CAR WITH HOLOGRAPHIC WINDSCREENS

(30) Priorité: 27.05.2019 FR 1905584
(43) Date de publication de la demande: 02.12.2020
(73) Titulaire: ALSTOM Transport Technologies, 93400 Saint-Ouen (FR)
(72) Inventeur: SIMONI, Bastian, 94130 NOGENT SUR MARNE (FR)
(74) Mandataire: Lavoix

(56) Documents cités:
- WO-A1-2019/079826
- JP-A- H0 933 856
- US-A1- 2014 355 106
- US-A1- 2016 266 385

## Description

La présente invention concerne une voiture de véhicule ferroviaire comprenant :
- une caisse comprenant des parois définissant un compartiment interne destiné à recevoir des passagers ; et
- au moins une vitre, chaque vitre étant reçue dans une ouverture définie dans les parois, chaque vitre comprenant une face interne du côté du compartiment interne et une face externe du côté extérieur de la voiture.

Un écran holographique peut être réalisé par l'application d'un film holographique constitué de micro-lentilles de Fresnel sur une surface en verre, comme un vitrage. Il devient alors possible d'afficher sur le vitrage un contenu tridimensionnel au moyen d'un vidéoprojecteur adapté, orienté vers le vitrage.

L'utilisation de tels écrans dans un véhicule, notamment sur les vitres d'un véhicule ferroviaire accueillant des passagers, permet d'afficher des informations sur le voyage, les alentours, ou des services proposés aux voyageurs. Il est également possible de projeter des images ou des vidéos contribuant à l'agrément des passagers. Le document US 2016/266385 A1 divulgue une voiture de véhicule comprenant au moins une vitre, la voiture comprenant au moins un système de projection situé dans le compartiment et configuré pour projeter des images en direction de la vitre, la vitre comprenant un film holographique agencé pour afficher les images projetées par le système de projection et un film semi-réfléchissant. Le document WO 2019/079826 A1 divulgue un véhicule ferroviaire comprenant un système de projection afin de projeter un hologramme à des passagers.

Le vidéoprojecteur utilisé pour un écran holographique génère un flux lumineux d'intensité importante. Pour le confort des passagers, il est généralement situé en hauteur, du côté interne de l'écran, afin de ne pas envoyer de flux lumineux dans les yeux des passagers.

Cependant, par exemple lorsque le véhicule ferroviaire est à quai dans une gare, des passants situés sur le quai peuvent être exposées directement au flux lumineux en provenance du vidéoprojecteur, traversant les vitres du véhicule. Cela est d'autant plus probable qu'une vitre de véhicule ferroviaire, vue de l'extérieur, est généralement sombre, de sorte qu'un affichage lumineux attire naturellement le regard, ce qui augmente les risques d'éblouissement.

Un but de l'invention est de fournir une voiture de véhicule ferroviaire permettant de mettre en oeuvre un affichage holographique d'informations à destination des voyageurs, et présentant un risque d'éblouissement réduit pour les passants à l'extérieur de la voiture.

A cet effet, l'invention a pour objet une voiture de véhicule ferroviaire du type précité, dans laquelle la voiture comprend au moins un système de projection situé dans le compartiment et configuré pour projeter des images en direction de la vitre, la vitre comprenant :
- un film holographique agencé pour afficher les images projetées par le système de projection ; et
- un film semi-réfléchissant présentant, pour toute longueur d'onde du spectre visible, un taux de réflexion de la lumière en incidence normale compris entre 20% et 70%.

Selon des modes de réalisation particuliers, la voiture de véhicule ferroviaire selon l'invention présente l'une ou plusieurs des caractéristiques suivantes, prise(s) isolément ou selon toutes les combinaisons techniquement réalisables :
- le film semi-réfléchissant est disposé entre le film holographique et la face externe de la vitre ;
- le film semi-réfléchissant présente, pour toute longueur d'onde du spectre visible, un taux de réflexion de la lumière en incidence normale compris entre 40% et 60% ;
- la vitre comprend une pluralité de couches de verre, le film holographique s'étendant entre deux des couches de verre ;
- le film semi-réfléchissant s'étend entre deux des couches de verre ;
- le film semi-réfléchissant s'étend sur une face externe de la couche de verre disposée le plus extérieurement par rapport au compartiment interne parmi les couches de verre ;
- au moins une couche de verre est une couche de verre trempé ;
- la couche de verre disposée la plus intérieurement par rapport au compartiment interne parmi les couches de verre est la ou une des couches de verre trempé ;
- la vitre comprend un film anti-vandalisme disposé entre une des couches de verre et la face interne de la vitre ;
- le film anti-vandalisme comprend un polyester renforcé.

L'invention sera mieux comprise à la lecture de la description qui suit, donnée uniquement à titre d'exemple et faite en référence aux dessins annexés, sur lesquels :
[Fig 1] la figure 1 est une vue en coupe transversale partielle d'une voiture de véhicule ferroviaire selon l'invention ;
[Fig 2] la figure 2 est une vue en coupe transversale d'une vitre de la voiture représentée sur la figure 1 ;
[Fig 3] la figure 3 est une vue en coupe transversale d'une vitre d'une voiture selon un autre mode de réalisation de l'invention ;

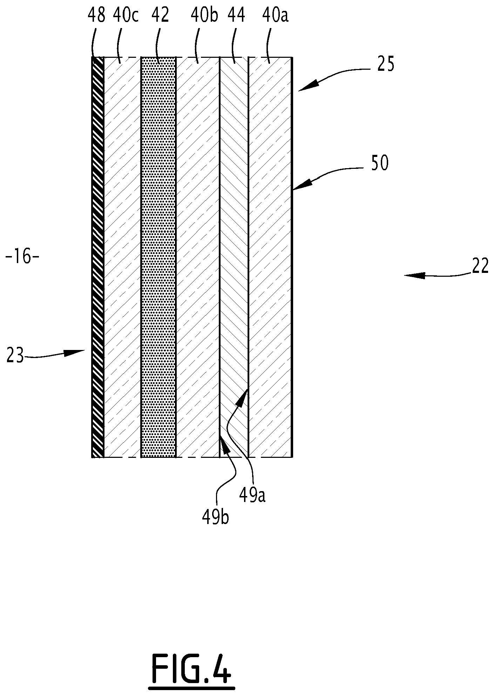

[Fig 4] la figure 4 est une vue en coupe transversale d'une vitre d'une voiture selon une variante du mode de réalisation de la figure 3 ; et
[Fig 5] la figure 5 est une vue en coupe transversale d'une vitre d'une voiture selon un autre mode de réalisation de l'invention.

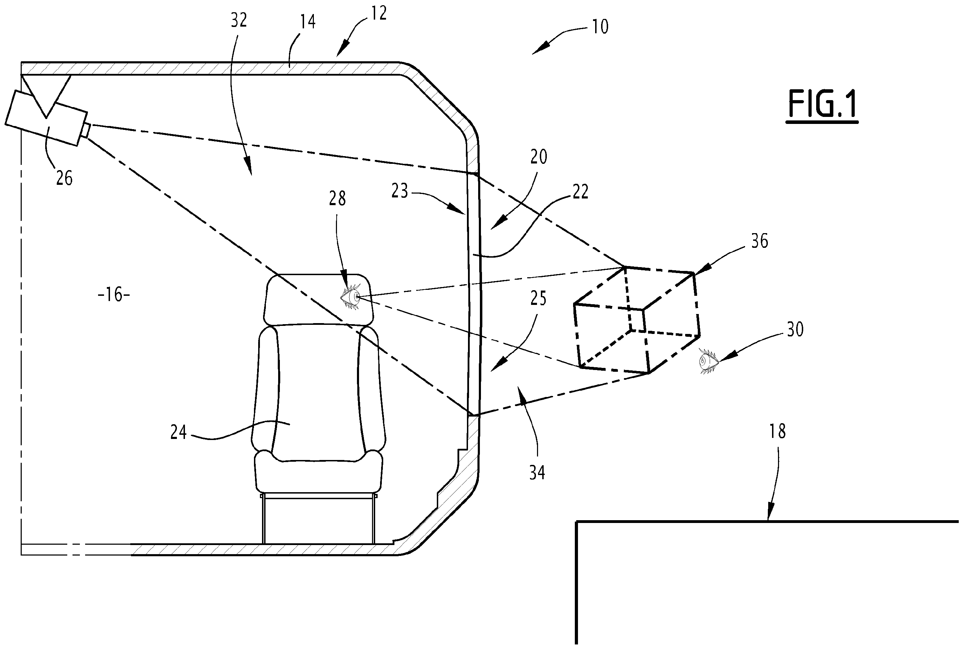

Une voiture 10 de véhicule ferroviaire selon l'invention est représentée sur la figure 1. Elle comprend une caisse 12 montée sur roues (non représentées). La voiture 10 est représentée à l'arrêt en face d'un quai 18, par exemple pour la montée et la descente de voyageurs.

La caisse 12 comprend des parois 14 délimitant un compartiment 16 interne propre à accueillir des voyageurs.

Dans tout ce qui suit, on entend par « côté, face ou couche interne » le côté, la face ou la couche le plus proche du compartiment 16, et par « côté, face ou couche externe » le côté la face ou la couche la plus proche de l'extérieur de la voiture 10.

De plus, par spectre visible, on entend l'ensemble des ondes électromagnétiques dont la longueur d'onde est comprise entre 400 nm et 800 nm.

Les parois 14 définissent une pluralité d'ouvertures 20, dont une seule est représentée sur la figure 1, recevant chacune une vitre 22, destinée à permettre aux voyageurs de voir l'extérieur de la voiture 10. Ceci diminue l'impression de confinement et rend le voyage plus agréable.

Chaque vitre 22 s'étend entre le compartiment 16 et l'extérieur de la voiture 10, et comprend une face interne 23 du côté du compartiment interne 16 et une face externe 25 du côté extérieur de la voiture 10.

Le compartiment 16 reçoit des sièges 24, dont un seul est représenté sur la figure 1, accueillant les voyageurs, ainsi qu'au moins un vidéoprojecteur 26 adapté pour projeter des images holographiques.

Un voyageur 28 assis sur le siège 24 est représenté schématiquement sur la figure 1 par un premier œil. Le regard du voyageur 28 est dirigé vers l'ouverture 20 voisine du siège 24, du côté interne.

Un second œil figure un passant 30 se trouvant sur le quai 18, par exemple attendant l'ouverture des portes pour monter dans la voiture 10. Le regard du passant 30 est également dirigé vers l'ouverture 20, du côté extérieur.

Le projecteur 26 est adapté pour projeter une image holographique en direction de la vitre 22, formant un faisceau divergeant 32 incident sur la vitre 22, du côté interne.

Le projecteur 26 est situé près de la vitre 22, par exemple à une distance comprise entre 30 cm et 70 cm de préférence comprise entre 40 cm et 60 cm. Le projecteur 26 est situé en partie haute du compartiment 16. Le projecteur 26 est un vidéoprojecteur courte focale ayant un rapport de projection (rapport entre la taille de l'image projetée et la distance projecteur-vitre 22) inférieur à 1, de préférence inférieur à 0,5.

La vitre 22 est une vitre holographique, c'est-à-dire propre à constituer un écran holographique pour afficher des images projetées par le vidéoprojecteur 26 au voyageur 28. La vitre 22 est ainsi adaptée pour refocaliser le faisceau divergeant 32 et former un faisceau convergent 34, de manière à former une image holographique 36 observable depuis le compartiment 16.

Le faisceau convergent 34 présente une intensité lumineuse importante, notamment supérieure à 1000 lumens. Une telle intensité lumineuse ne constitue pas un risque important en soi, mais une observation prolongée peut causer un éblouissement chez le passant 30, notamment s'il se trouve à proximité de l'image holographique 36 comme représenté sur la figure 1.

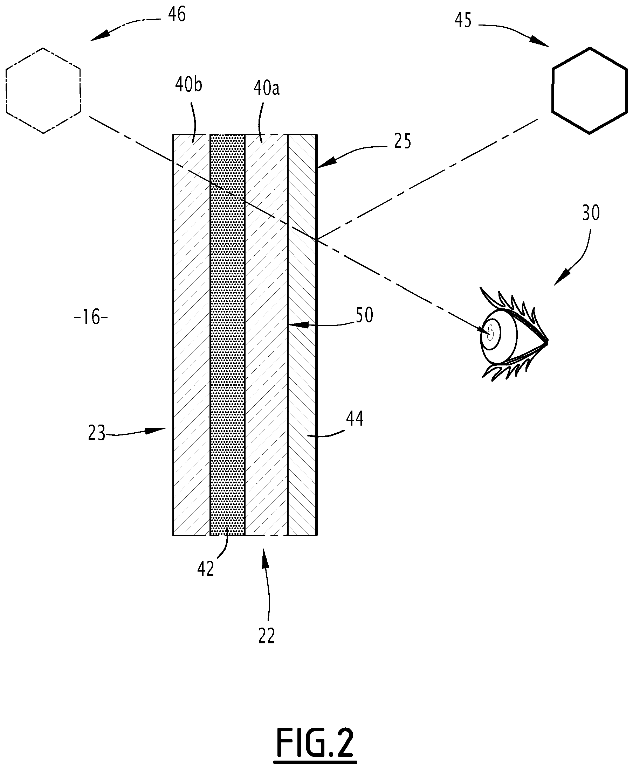

Dans le mode de réalisation représenté sur la figure 2, la vitre 22 comprend deux couches de verre 40a, 40b, ainsi qu'un film holographique 42 agencé pour afficher les images projetées par le vidéoprojecteur 26, et un film semi-réfléchissant 44.

Les couches de verre 40a, 40b sont par exemple sensiblement planes, disposées parallèles l'une à l'autre et séparées par des couches de plastique transparent (non représentées) pour former un verre feuilleté, de manière connue en soi. Un tel verre feuilleté présente l'avantage de se briser sans projection d'éclats, ce qui réduit les risques de blessures dues aux bris de vitres.

La couche de verre 40b est disposée intérieurement relativement au compartiment interne 16, et la couche de verre 40a est disposée extérieurement.

Le film holographique 42 est propre à refocaliser le faisceau divergeant 32 lorsqu'il traverse la vitre 22 pour former un faisceau convergent 34 de manière à former l'image holographique 36.

Le film holographique 42 forme, de manière connue, une pluralité de microlentilles de Fresnel, c'est-à-dire que le film holographique 42 définit des motifs géométriques, répétés de manière régulière un grand nombre de fois sur sa surface, le diamètre de chaque motif étant inférieur au millimètre. Cela confère au film holographique 42 des propriétés optiques de focalisation de la lumière dans le spectre visible.

Le film holographique 42 est notamment un film mince réalisé à partir d'un matériau polymère, et non une couche en verre.

Le film holographique 42 s'étend avantageusement entre les deux couches de verre 40a, 40b, ce qui permet d'isoler le film holographique 42 de l'extérieur et du compartiment 16.

Notamment, le film holographique 42 est directement laminé entre les couches de verre 40a, 40b lors de la fabrication de la vitre 22.

En effet, le film holographique 42 est un élément fragile, susceptible d'être dégradé par les nettoyages fréquents du train à l'aide d'agents lessiviels, en particulier lorsqu'il est appliqué sur la face externe 25 de la vitre 22. De plus, il est particulièrement vulnérable aux dégradations accidentelles ou dues au vandalisme en particulier lorsqu'il est appliqué sur la face interne 23 de la vitre 22. Enfin, il n'est généralement pas conforme aux normes de sécurité concernant le feu et les fumées applicables aux véhicules accueillant des voyageurs.

Cela permet notamment de protéger le film holographique 42 des dégradations accidentelles, du vandalisme, ainsi que des nettoyages de l'extérieur de la voiture 10. Cela permet de plus d'améliorer la correspondance de la vitre 22 aux normes de sécurité contre le feu et les fumées.

En variante, le film holographique 42 est positionné sur la face interne 23 de la vitre 22, c'est-à-dire sur une face interne de la couche de verre 40b disposée le plus intérieurement. Avantageusement, un film anti-vandalisme est alors disposé sur le film holographique.

Le film semi-réfléchissant 44 est propre à transmettre une partie de la lumière incidente, dans le spectre visible, et à en réfléchir une partie importante, au moins pour les rayons lumineux provenant de l'extérieur de la voiture 10, la partie réfléchie étant suffisante pour conférer à la vitre 22 un aspect réfléchissant lorsqu'elle est observée depuis l'extérieur de la voiture 10.

Par un aspect réfléchissant, on entend que des objets 45 de l'environnement du passant 30 génèrent des reflets 46 respectifs dans la vitre 22, et que les reflets 46 sont perçus par le passant 30 avec une intensité comparable à celle du faisceau convergent 34.

Le film semi-réfléchissant 44 présente notamment un taux de réflexion de la lumière dans le spectre visible compris entre 20% et 70%, pour chacune des fréquences comprises dans le spectre visible, avantageusement entre 40% et 60%. Le taux de réflexion de la lumière du film semi-réfléchissant est mesuré en incidence normale.

Le film semi-réfléchissant 44 comprend notamment une matrice en matériau polymère dans laquelle est incrustée une couche métallique ou une pluralité de particules métalliques, par exemple en argent, qui lui confèrent ses propriétés optiques de réflexion de la lumière visible.

Avantageusement, le film semi-réfléchissant 44 est disposé extérieurement par rapport au film holographique 42, afin de réduire efficacement la transmission du faisceau convergent 34.

Le film semi-réfléchissant 44 s'étend sur une face externe 50 de la couche de verre 40a la plus externe de la vitre 22, au contact de l'extérieur de la voiture 10. Cela permet un accès facile au film semi-réfléchissant 44, par exemple pour le remplacer, mais augmente les risques d'endommagement du film semi-réfléchissant 44.

Avantageusement, un film anti-vandalisme est disposé sur le film semi-réfléchissant 44.

Le compartiment 16 est nettement moins lumineux que l'extérieur de la voiture 10, ce qui permet à la vitre 22 munie du film semi-réfléchissant 44 de jouer le rôle d'un miroir sans tain.

Dans une variante du premier mode de réalisation, la vitre 22 comprend une unique couche de verre et le film holographique 42 est positionné sur une face interne de la couche de verre, c'est-à-dire de la vitre 22, tandis que le film semi-réfléchissant 44 s'étend sur une face externe de la couche de verre, c'est-à-dire de la vitre 22.

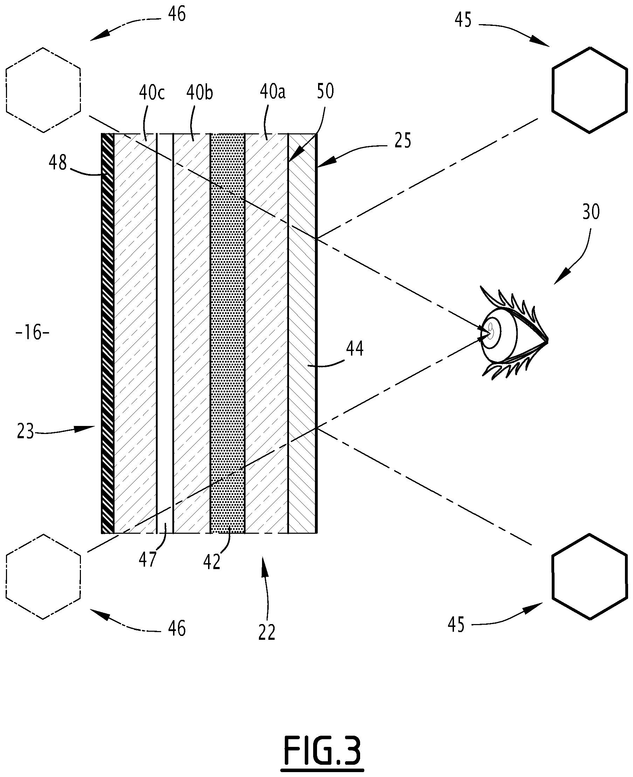

Une voiture 10 selon un deuxième mode de réalisation, représenté sur la figure 3, va maintenant être décrite. La voiture 10 selon le deuxième mode de réalisation est identique à la voiture 10 décrite ci-dessus, excepté pour ce qui suit.

La vitre 22 comprend trois couches de verre 40a, 40b, 40c. La couche de verre 40a est disposée la plus extérieurement et la couche de verre 40c la plus intérieurement par rapport au compartiment interne 16, la couche de verre 40b médiane s'étendant entre les couches de verre 40a, 40c.

Une lame d'air 47 sépare la couche de verre 40c la plus interne et la couche de verre 40b médiane. La lame d'air 47 améliore l'isolation thermique et acoustique de la vitre 22.

Avantageusement, la couche de verre 40c est une couche de verre trempé, c'est-à-dire un verre renforcé par un processus thermique ou chimique en vue d'améliorer sa résistance mécanique. Cela permet de réduire les risques de dégradation de la vitre 22 suite aux accidents et au vandalisme

Avantageusement, la vitre 22 comprend de plus un film anti-vandalisme 48 disposé sur la face interne 23 de la vitre 22, s'étendant sur une face interne de la couche de verre 40c disposée le plus intérieurement. Le film anti-vandalisme 48 comprend notamment un polyester renforcé. Cela permet de protéger encore mieux la vitre 22 des dégradations.

Le film holographique 42 s'étend entre les couches de verre 40a, 40b, et le film semi-réfléchissant 44 s'étend sur la face externe 50 de la couche de verre 40a.

Selon une variante du deuxième mode de réalisation, le film holographique 42 est positionné sur la face interne 23 de la vitre 22, c'est-à-dire sur une face interne de la couche de verre 40c disposée le plus intérieurement. Avantageusement, un film anti-vandalisme est alors disposé sur le film holographique.

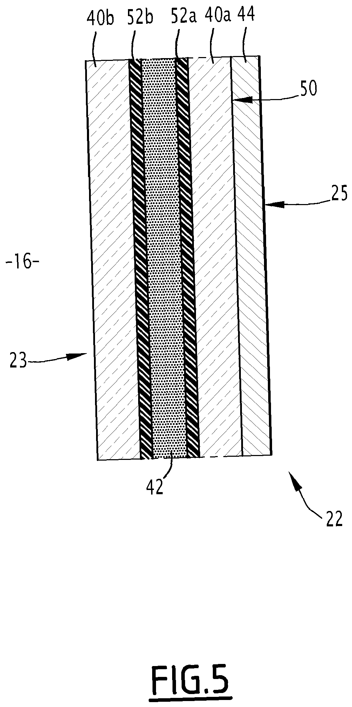

Une voiture selon un troisième mode de réalisation de l'invention va maintenant être décrite, comprenant au moins une vitre 22 représentée sur la figure 5. La voiture selon le troisième mode de réalisation est similaire à la voiture 10 décrite dans le premier mode de réalisation, et les éléments communs portent les mêmes références et ne sont pas décrits une nouvelle fois ci-après.

La vitre 22 comprend, de l'extérieur vers l'intérieur, une première couche de verre 40a, une première couche de plastique transparent 52a, le film holographique 42, une deuxième couche de plastique transparent 52b et une deuxième couche de verre 40b.

Le film semi-réfléchissant 44 de la vitre 22 s'étend sur la face externe 50 de la couche de verre 40a la plus extérieure.

Les couches de plastique transparent 52a, 52b forment avec les couches de verre 40a, 40b un verre feuilleté, comme décrit plus haut.

Les couches de plastique transparent sont notamment réalisées en polybutyral de vinyle, ou PVB.

L'insertion du film holographique 42 entre les couches de plastique transparent 52a, 52b en améliore la protection.

Grâce aux caractéristiques décrites, la voiture 10 de véhicule ferroviaire permet de mettre en œuvre un affichage holographique d'informations à destination du voyageur 28, tout en présentant un risque d'éblouissement réduit pour le passant 30 à l'extérieur de la voiture 10.

Le passager 28 se trouvant dans le compartiment 16 peut ainsi observer l'extérieur de manière sensiblement inchangée, tandis que le passant 30, se trouvant notamment sur un quai, a l'impression que la vitre 22 est un miroir totalement réfléchissant.

La tache lumineuse formée par la lumière émise par le vidéoprojecteur 26 est alors moins perceptible pour le passant 30 parmi les reflets 46 des objets 45 de son environnement, et n'attire pas le regard, ce qui réduit fortement les risques d'éblouissement.

## Revendications

1. Voiture (10) de véhicule ferroviaire, comprenant :
- une caisse (12) comprenant des parois (14) définissant un compartiment interne (16) destiné à recevoir des passagers ; et
- au moins une vitre (22), chaque vitre (22) étant reçue dans une ouverture (20) définie dans les parois (14), chaque vitre (22) comprenant une face interne (23) du côté du compartiment interne (16) et une face externe (25) du côté extérieur de la voiture (10) ;
**caractérisée en ce que** la voiture (10) comprend au moins un système de projection (26) situé dans le compartiment (16) et configuré pour projeter des images en direction de la vitre (22), la vitre (22) comprenant :
- un film holographique (42) agencé pour afficher les images projetées par le système de projection (26) ; et
- un film semi-réfléchissant (44) présentant, pour toute longueur d'onde du spectre visible, un taux de réflexion de la lumière en incidence normale compris entre 20% et 70%.

2. Voiture (10) selon la revendication 1, dans laquelle le film semi-réfléchissant (44) est disposé entre le film holographique (42) et la face externe (25) de la vitre (22).

3. Voiture (10) selon la revendication 1 ou 2, dans laquelle le film semi-réfléchissant (44) présente, pour toute longueur d'onde du spectre visible, un taux de réflexion de la lumière en incidence normale compris entre 40% et 60%.

4. Voiture (10) selon l'une des revendications 1 à 3, dans laquelle la vitre (22) comprend une pluralité de couches de verre (40a, 40b, 40c), le film holographique (42) s'étendant entre deux des couches de verre (40a, 40b).

5. Voiture (10) de véhicule ferroviaire selon la revendication 4, dans laquelle le film semi-réfléchissant (44) s'étend entre deux des couches de verre (40a, 40b).

6. Voiture (10) selon la revendication 4 ou 5, dans laquelle le film semi-réfléchissant (44) s'étend sur une face externe (50) de la couche de verre (40a) disposée le plus extérieurement par rapport au compartiment interne (16) parmi les couches de verre (40a, 40b, 40c).

7. Voiture (10) selon l'une des revendications 4 à 6, dans laquelle au moins une couche de verre (40c) est une couche de verre trempé.

8. Voiture (10) selon la revendication 7, dans laquelle la couche de verre (40c) disposée la plus intérieurement par rapport au compartiment interne (16) parmi les couches de verre (40a, 40b, 40c) est la ou une des couches de verre trempé.

9. Voiture (10) selon l'une des revendications 4 à 8, dans laquelle la vitre (22) comprend un film anti-vandalisme (48) disposé entre une des couches de verre (40c) et la face interne (23) de la vitre (22).

10. Voiture (10) selon la revendication 9, dans laquelle le film anti-vandalisme (48) comprend un polyester renforcé.

## Patentansprüche

1. Wagen (10) für ein Schienenfahrzeug, umfassend:
- einen Wagenkasten (12), umfassend Trennwände (14), die ein Innenabteil (16) definieren, das zum Aufnehmen von Passagieren bestimmt ist; und
- mindestens eine Scheibe (22), wobei jede Scheibe (22) in einer Öffnung (20) aufgenommen ist, die in den Trennwänden (14) definiert ist, jede Scheibe (22) umfassend eine Innenseite (23) auf der Seite des Innenabteils (16) und eine Außenseite (25) auf der Außenseite des Wagens (10);
**dadurch gekennzeichnet, dass** der Wagen (10) mindestens ein Projektionssystem (26) umfasst, das sich in dem Abteil (16) befindet und konfiguriert ist, um Bilder in Richtung der Scheibe (22) zu projizieren, die Scheibe (22) umfassend:
- einen holographischen Film (42), der angeordnet ist, um die von dem Projektionssystem (26) projizierten Bilder anzuzeigen; und
- einen halbreflektierenden Film (44), der für jede Wellenlänge des sichtbaren Spektrums eine Lichtreflexion bei normalem Einfall zwischen 20 % und 70 % aufweist.

2. Wagen (10) nach Anspruch 1, wobei der halbreflektierende Film (44) zwischen dem holographischen Film (42) und der Außenseite (25) der Scheibe (22) angeordnet ist.

3. Auto (10) nach Anspruch 1 oder 2, wobei der halbreflektierende Film (44) für jede Wellenlänge des sichtbaren Spektrums eine Lichtreflexionsrate bei normalem Einfall zwischen 40 % und 60 % aufweist.

4. Wagen (10) nach einem der Ansprüche 1 bis 3, wobei die Scheibe (22) eine Vielzahl von Glasschichten (40a, 40b, 40c) umfasst, wobei sich der holographische Film (42) zwischen zwei der Glasschichten (40a, 40b) erstreckt.

5. Wagen (10) eines Schienenfahrzeugs nach Anspruch 4, wobei sich der halbreflektierende Film (44) zwischen zwei der Glasschichten (40a, 40b) erstreckt.

6. Wagen (10) nach Anspruch 4 oder 5, wobei sich der halbreflektierende Film (44) über eine Außenseite (50) der Glasschicht (40a) erstreckt, die in Bezug auf das Innenabteil (16) unter den Glasschichten (40a, 40b, 40c) am äußersten angeordnet ist.

7. Wagen (10) nach einem der Ansprüche 4 bis 6, wobei mindestens eine Glasschicht (40c) eine Schicht aus gehärtetem Glas ist.

8. Wagen (10) nach Anspruch 7, wobei die Glasschicht (40c), die in Bezug auf das Innenabteil (16) unter den Glasschichten (40a, 40b, 40c) am innersten angeordnet ist, die oder eine der gehärteten Glasschichten ist.

9. Wagen (10) nach einem der Ansprüche 4 bis 8, wobei die Scheibe (22) einen Anti-Vandalismus-Film (48) umfasst, der zwischen einer der Glasschichten (40c) und der Innenseite (23) der Scheibe (22) angeordnet ist.

10. Wagen (10) nach Anspruch 9, wobei der Anti-Vandalismus-Film (48) einen verstärkten Polyester umfasst.

## Claims

1. A railway vehicle car (10), comprising:
- a body (12) comprising walls (14) defining an inner compartment (16) designed to receive passengers; and
- at least one glass pane (22), each glass pane (22) being received in an opening (20) defined in the walls (14), each glass pane (22) comprising an inner face (23) on the side of the inner compartment (16) and an outer face (25) on the outer side of the car (10); **characterized in that** the car (10) comprises at least one projection system (26) located in the compartment (16) and configured to project images toward the glass pane (22), the glass pane (22) comprising:
- a holographic film (42) arranged to display the images projected by the projection system (26); and
- a semi-reflective film (44) having, for any wavelength of the visible spectrum, a reflection rate of the light in normal incidence of between 20% and 70%.

2. The car (10) according to claim 1, wherein the semi-reflective film (44) is arranged between the holographic film (42) and the outer face (25) of the glass pane (22).

3. The car (10) according to claim 1 or 2, wherein the semi-reflective film (44) has, for any wavelength of the visible spectrum, a reflection rate of the light in normal incidence of between 40% and 60%.

4. The car (10) according to one of claims 1 to 3, wherein the glass pane (22) comprises a plurality of layers of glass (40a, 40b, 40c), the holographic film (42) extending between two of the layers of glass (40a, 40b).

5. The railway vehicle car (10) according to claim 4, wherein the semi-reflective film (44) extends between two of the layers of glass (40a, 40b).

6. The car (10) according to claim 4 or 5, wherein the semi-reflective film (44) extends over an outer face (50) of the outermost layer of glass (40a) relative to the inner compartment (16) among the layers of glass (40a, 40b, 40c).

7. The car (10) according to one of claims 4 to 6, wherein at least one layer of glass is a layer (40c) of tempered glass.

8. The car (10) according to claim 7, wherein the innermost layer (40c) of glass relative to the inner compartment (16) among the layers of glass (40a, 40b, 40c) is the or one of the layers of tempered glass.

9. The car (10) according to one of claims 4 to 8, wherein the glass pane (22) comprises an anti-vandalism film (48) arranged between one of the layers of glass (40c) and the inner face (23) of the glass pane (22).

10. The car (10) according to claim 9, wherein the anti-vandalism film (48) comprises a reinforced polyester.
